# EUROPEAN PATENT SPECIFICATION

(11) **EP 1 393 033 B1**
(45) Date of publication and mention of the grant of the patent: **11.06.2008**
(21) Application number: 02727884.5
(22) Date of filing: 13.05.2002
(51) Int. Cl.: G01K 11/32, G01K 13/00

(54) **A CRYOGENIC OPTICAL FIBRE TEMPERATURE SENSOR**
EIN KRYOGENER FASEROPTISCHER TEMPERATURSENSOR
CAPTEUR DE TEMPERATURE A FIBRE OPTIQUE CRYOGENIQUE

(30) Priority: 11.05.2001 GB 0111623
(43) Date of publication of application: 03.03.2004
(73) Proprietor: European Organization for Nuclear Research, 1211 Genève 23 (CH)
(72) Inventor: SCANDALE, Walter, CH-1204 Geneva (CH); FACCHINI, Massimo, CH-1004 Lausanne (CH); THéVENAZ, Luc, CH-1400 Yverdon-les-Bains (CH)
(74) Representative: Roberts, Gwilym Vaughan
(86) International application number: PCT/IB2002/001630
(87) International publication number: WO 2002/093120

(56) References cited:
- EP-A- 0 213 872
- EP-A- 0 907 073

## Description

The invention relates to a method for sensing cryogenic temperature.

The present invention relates also to a temperature sensor. In particular, the present invention relates to an optical fibre temperature sensor for sensing cryogenic temperatures.

Many arrangements are known for sensing cryogenic temperatures, i.e. temperatures below 200K. One of the most common arrangements uses thermometers. For distributed systems, however, a plurality of such thermometers is needed and each has to be individually calibrated. This can be complex and so is disadvantageous.

Much effort has been made in recent years to overcome the limitations of standard thermometer based cryogenic temperature sensors. One solution is taught in US 6,072,922. This discloses a cryogenic temperature sensor, which includes an optical fibre that has a permanent Bragg grating at a location along the length of the fibre. The grating is adapted to selectively alter portions of the signal carried by the fibre. In the region of the grating, the fibre is coated with a material that has a thermal expansion co-efficient that is larger than its own. The coating increases sensitivity to changes in temperature at or around the grating.

Whilst the sensor described in US 6,072,922 goes some way to overcoming the disadvantages of prior arrangements, it suffers from the problem that standard and unprepared optical fibre cannot be used. Instead, the fibre used has to be specially adapted to include a grating and a coating. This increases the cost and complexity of the sensor.

Further background art is provided in EP-A-0 213 872, which discloses a method and apparatus using optical time-domain reflectometry. Optical time-domain reflectometry is used to sense respective values of a physical parameter, such as temperature, at different locations along an optical fibre. Back-scattered optical radiation, used to produce output signals indicative of the values being sensed, is restricted to a preselected single spectral line resulting from inelastic scattering in the fibre, using one of the Anti-Stokes Raman lines, or to two mutually adjacent such lines.

An object of the present invention is to provide a cryogenic temperature sensor that is simple and relatively cheap.

The present invention is a method for sensing cryogenic temperature as defined in claim 1 of the appended claims. The invention also provides a cryogenic temperature sensor as defined in claim 4.

Thus, according to an embodiment of the present invention, there is provided a method for sensing temperature comprising:
measuring at least two temperature dependent Brillouin scattering parameters in an optical fibre and
using the two measured parameters to determine the temperature.

An advantage of this method is that it provides an accurate measure of the temperature, even at cryogenic levels, using preferably a standard optical fibre. This makes the process relatively cheap. Another advantage is that the system is easy to calibrate. A yet further advantage is that distributed temperature measurements can be readily made.

Preferably, the step of measuring the parameters occurs at a measuring location, and preferably, the optical fibre is coiled in the vicinity of the measuring location.

The at least two temperature dependent Brillouin scattering parameters may include the linewidth or half linewidth of the spectral distribution, the central frequency υ_{B} of the spectral distribution and maximal gain g_{B}. Preferably, the linewidth or half linewidth and the central frequency υ_{B} are used. Alternatively, any other combination could be used.

According to another embodiment of the present invention, there is provided a sensor for sensing temperature comprising:
an optical fibre;
means for measuring at least two temperature dependent Brillouin scattering parameters, and
means for determining the temperature using the two measured parameters.

The at least two temperature dependent Brillouin scattering parameters may include the linewidth or half linewidth of the spectral distribution, the central frequency υ_{B} of the spectral distribution and maximal gain g_{B}. Preferably, the linewidth or half linewidth and the central frequency υ_{B} are used. Alternatively, any other combination could be used.

Preferably, the means for measuring at least two temperature dependent Brillouin scattering parameters comprise a Brillouin scattering analyser, for example the DiTeSt (OS-ST201) model, which is provided by OMNISENS S.A. of Lausanne, Switzerland.

According to still another embodiment of the present invention, there is provided a method for sensing cryogenic temperatures comprising:
measuring one or more temperature dependent Brillouin scattering parameters in an optical fibre, and
using at least one of the measured parameters to determine the cryogenic temperature.

The at least one temperature dependent Brillouin scattering parameters may include the linewidth or half linewidth of the spectral distribution, the central frequency υ_{B} of the spectral distribution and maximal gain g_{B}. Preferably, the linewidth or half linewidth and the central frequency υ_{B} are used. Alternatively, any other combination of parameters could be used.

According to yet another embodiment of the present invention, there is provided a system for sensing cryogenic temperature comprising:
an optical fibre;
means for measuring one or more temperature dependent Brillouin scattering parameters in the optical fibre, and
means operable to use at least one of the measured parameters to determine the cryogenic temperature.

Various aspects of the invention will now be described by way of example only and with reference to the accompanying drawings, of which:
Figure 1 is a schematic diagram of an arrangement for cryogenic temperature measurement;
Figure 2 shows a typical spectral distribution for Brillouin scattered light;
Figure 3 shows a plot of the central frequency υ_{B} and linewidth for Brillouin scattered light, as a function of temperature;
Figure 4 is a schematic diagram of an arrangement for measuring cryogenic temperatures in a plurality of different vessels, using a single distributed fibre; and
Figure 5 is a plot of Brillouin central frequency shift as a function of distance along the length of a sensing fibre that is installed in three different cryogenic vessels.

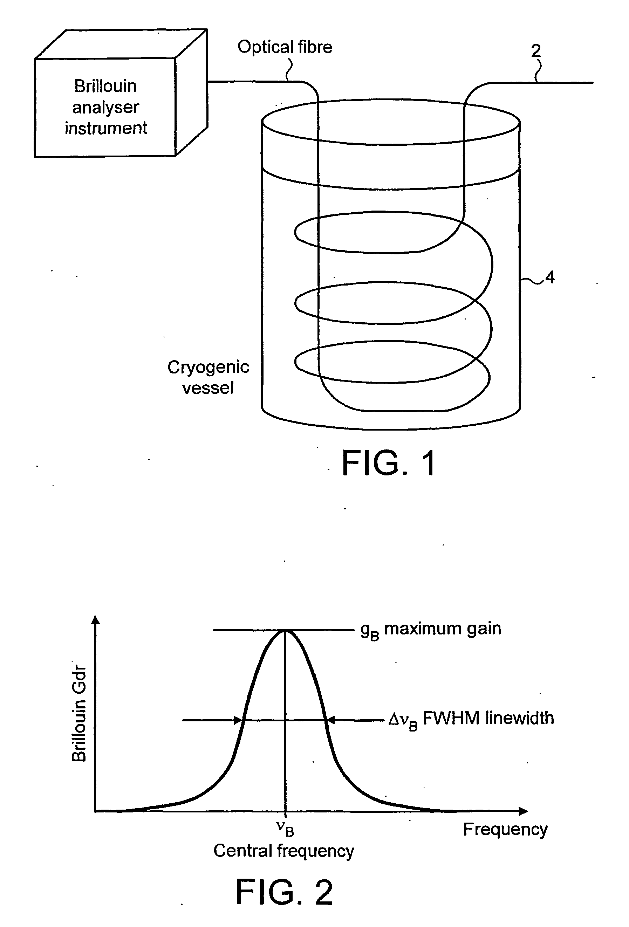

Figure 1 shows a sensor comprising an optical fibre 2, which fibre 2 is illustrated immersed in a cryogenic vessel 4. The fibre 2 is preferably a standard optical fibre, for example Coming SMF 28. The fibre 2 extends through the vessel 4 to a discrete area where the temperature is to be measured. Connected to one end of the fibre 2, externally of the cryogenic vessel 4, is a Brillouin spectral analyser 8 for measuring Brillouin scattering effects in the fibre. Brillouin spectral analysers 8 are known in the art and so will not be described herein in detail. Associated with the analyser 8 is a processor (not shown) for determining the temperature using measured Brillouin data.

The temperature of the vessel 4 is determined using Brillouin scattering measurements. In order to measure Brillouin scattering effects, in one embodiment, two light waves are propagated through the fibre 2 in opposite directions, thereby to generate an acoustic wave, which interacts with the light. The result of this interaction transforms the optical signal, whereby the transformed signal carries quantitative information about the acoustic properties of the fibre, such as acoustic velocity and acoustic damping. These quantities depend on temperature and so provide a simple and accurate means for measuring temperature. Such a transformation of the light signal by an acoustic wave is called stimulated Brillouin scattering. It is well known that it is also possible to generate a Brillouin scattered signal using a single light wave and thermally generated acoustic waves. This is called spontaneous Brillouin scattering.

Figure 2 shows an example of a typical spectral distribution of Brillouin scattered light. This is characterised by three parameters: central frequency υ_{B}, linewidth Δυ_{B} and maximal gain g_{B}. These three parameters can be used individually or in combined pairs or all together to determine cryogenic temperature.

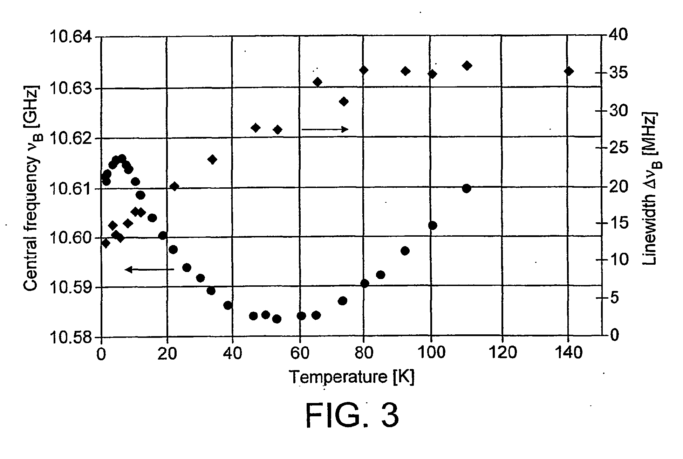

Figure 3 shows a measurement of central frequency υ_{B} and linewidth Δυ_{B} as a function of temperature. By correlating these two Brillouin parameters, an accurate measurement of temperature can be obtained over a broad temperature range. It should be noted that it is possible to use a single parameter to determine an accurate measure of cryogenic temperature over a restricted range, provided the restricted range is known. For example, in the plot of Figure 3, if the Brillouin shift were measured as 10.6GHz, this could mean that the temperature is in the region of, say, 20K or 100K. Assuming additional knowledge of the restricted temperature range, this ambiguity can be resolved, e.g. if it is known that the temperature is under 77K then the temperature would be determined as 20K. However, if the linewidth is simultaneously measured as 20MHz, this provides a more accurate resolution of the ambiguity in the Brillouin shift measurements and indicates that the temperature is 20K. In this way, the accuracy of the technique in improved by using two Brillouin scattering parameters.

In use of the sensor of Figure 1, the Brillouin scattering parameters are measured and used to determine the temperature of the vessel 4. As mentioned above the preferred parameters may be central frequency υ_{B} and linewidth Δυ_{B}. Once the measurements are taken, the step of determining the temperature is typically done using the processor. This is programmed to compare the measured parameters with predetermined or calibrated measurements, thereby to determine the temperature.

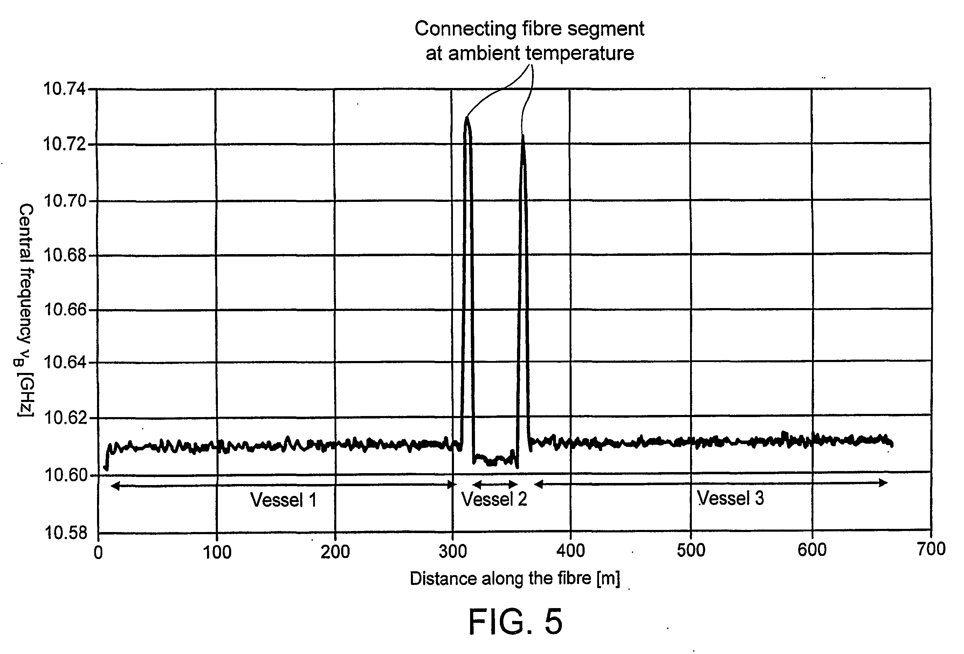

The use of optical fibre 2 as described above makes distributed measurements possible, i.e. provides a measurement of temperature at discrete points along the length of the fibre. This is because Brillouin scattering parameters, in particular the shift in the Brillouin frequency, can be measured as a function of length along a fibre. This is well known. A typical plot of Brillouin shift frequency against distance along an optical fibre for a verifying temperature is shown in Figure 5.

The ability to determine a temperature at a plurality of locations is advantageous and for certain applications means that a single optical cable can replace several thousand classical point probes.

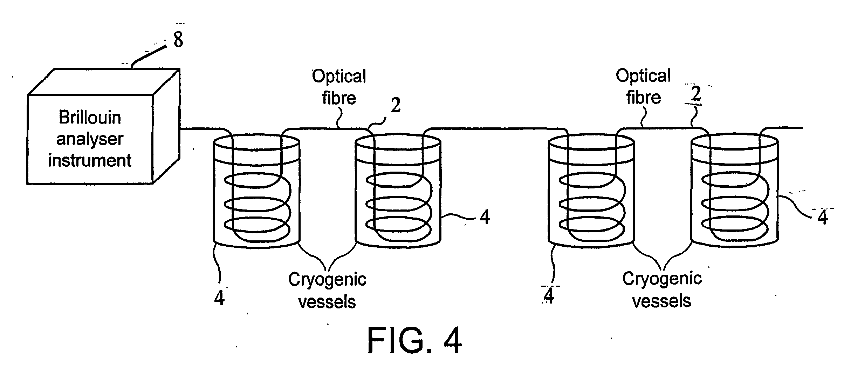

Figure 1 shows an arrangement in which the optical fibre 2 extends along a substantial part of the cryogenic vessel 4. This enables a distributed measurement of the temperature along the length of the fibre 2. Figure 4 shows an arrangement in which the optical fibre 2 extends through a plurality of different cryogenic vessels 4. This enables a distributed measurement of the temperature across different vessels using a single fibre 2 and a single Brillouin scattering analyser 8. This is advantageous. As an example, Figure 5 shows a plot of Brillouin central frequency shift as a function of distance along the length of a sensing fibre that is installed in three different cryogenic vessels. The peaks in this plot are indicative of temperature differences between the vessels and the laboratory ambient - the flat part in this plot can be used to determine the absolute temperature in each vessel.

By using at least two Brillouin scattering parameters as described above, it is possible to gain an accurate measure of cryogenic temperatures, whilst using preferably a standard optical fibre.

As shown in Figures 1 and 4, the optical fibre 2 is preferably coiled within the cryogenic vessel(s) 4, that is, in the vicinity of the measurement location(s), to enhance the sensitivity of the measurement.

A skilled person will appreciate that variations of the disclosed arrangements are possible without departing from the invention. Accordingly, the above description of a specific embodiment is made by way of example and not for the purposes of limitation. It will be clear to the skilled person that minor modifications can be made without significant changes to the operation described above.

## Claims

1. A method for sensing cryogenic temperature comprising:
measuring a cryogenic temperature dependent Brillouin scattering parameter in an optical fibre (2); and
using the measured parameter to determine the cryogenic temperature;
**characterised in that** the cryogenic temperature dependent Brillouin scattering parameter is the linewidth or half linewidth of the spectral distribution; and
wherein the measured parameter is compared with predetermined or calibrated measurements to determine the cryogenic temperature.

2. A method as claimed in claim 1, further comprising:
measuring at least one additional cryogenic temperature dependent Brillouin scattering parameter in the optical fibre (2); and
using the measured parameters to determine the cryogenic temperature by comparing the measured parameters with predetermined or calibrated measurements;
wherein the at least one additional cryogenic temperature dependent Brillouin scattering parameter is one or more of the central frequency υ_{B} of the spectral distribution and the maximum gain g_{B}; and
wherein the step of using comprises using the linewidth or half linewidth and the maximum gain g_{B}; or the linewidth or half linewidth and the central frequency υ_{B}; or the linewidth or half linewidth, the maximum gain g_{B} and the central frequency υ_{B}.

3. A method as claimed in claim 1 or claim 2 wherein the cryogenic temperature is in a range below 200K.

4. A cryogenic temperature sensor for sensing cryogenic temperature comprising:
an optical fibre (2);
means for measuring at a measuring location a cryogenic temperature dependent Brillouin scattering parameter in the optical fibre (2); and
means for using the measured parameter to determine the cryogenic temperature;
**characterised in that** the cryogenic temperature dependent Brillouin scattering parameter is the linewidth or half linewidth of the spectral distribution; and
wherein the means for using is arranged to compare the measured parameter with predetermined or calibrated measurements to determine the cryogenic temperature.

5. A sensor as claimed in claim 4, further comprising:
means for measuring at a measuring location at least one additional cryogenic temperature dependent Brillouin scattering parameter in the optical fibre (2); and
means for using the measured parameters to determine the cryogenic temperature by comparing the measured parameters with predetermined or calibrated measurements;
wherein the additional cryogenic temperature dependent Brillouin scattering parameter is one or more of the central frequency υ_{B} of the spectral distribution and the maximum gain g_{B}; and
wherein the means for using is arranged to use the linewidth or half linewidth and the maximum gain g_{B}; or the linewidth or half linewidth and the central frequency υ_{B}; or the linewidth or half linewidth, the maximum gain g_{B} and the central frequency υ_{B}.

6. A sensor as claimed in claim 4 or claim 5, wherein the cryogenic temperature is in a range below 200K.

7. A sensor as claimed in any of claims 4 to 6, comprising means for determining temperature as a function of length along the optical fibre (2).

8. A sensor as claimed in any of claims 4 to 7, wherein the means for measuring comprise a Brillouin scattering analyser (8).

9. A sensor as claimed in any of claims 4 to 8, wherein the optical fibre (2) is coiled in the vicinity of the measuring location.

## Patentansprüche

1. Verfahren zum Erfassen einer kryogenen Temperatur, umfassend:
das Messen eines von der kryogenen Temperatur abhängigen Brillouin-Streuparameters in einer optischen Faser (2); und
das Verwenden des gemessenen Parameters zur Bestimmung der kryogenen Temperatur;
**dadurch gekennzeichnet, dass** der von der kryogenen Temperatur abhängige Brillouin-Streuparameter die Linienbreite oder die halbe Linienbreite der spektralen Verteilung ist; und
wobei der gemessene Parameter mit vorbestimmten oder kalibrierten Messungen verglichen wird, um die kryogene Temperatur zu bestimmen.

2. Verfahren nach Anspruch 1, welches weiters umfasst:
das Messen zumindest eines zusätzlichen, von der kryogenen Temperatur abhängigen Brillouin-Streuparameters in der optischen Faser (2); und
das Verwenden der gemessenen Parameter zur Bestimmung der kryogenen Temperatur durch Vergleichen der gemessenen Parameter mit vorbestimmten oder kalibrierten Messungen;
wobei der zumindest eine zusätzliche, von der kryogenen Temperatur abhängige Brillouin-Streuparameter die Mittenfrequenz ν_{B} der spektralen Verteilung und/oder der maximale Gewinn g_{B} ist; und
wobei der Schritt des Verwendens das Verwenden der Linienbreite oder halben Linienbreite und des maximalen Gewinns g_{B}; oder der Linienbreite oder halben Linienbreite und der Mittenfrequenz ν_{B}; oder der Linienbreite oder halben Linienbreite, des maximalen Gewinns g_{B} und der Mittenfrequenz υ_{B} umfasst.

3. Verfahren nach Anspruch 1 oder 2, wobei die kryogene Temperatur im Bereich unter 200 K liegt.

4. Kryogener Temperatursensor zur Erfassung einer kryogenen Temperatur, mit:
einer optischen Faser (2);
Mitteln zum Messen eines von der kryogenen Temperatur abhängigen Brillouin-Streuparameters in der optischen Faser (2) an einer Messstelle; und
Mitteln zum Verwenden des gemessenen Parameters zur Bestimmung der kryogenen Temperatur;
**dadurch gekennzeichnet, dass** der von der kryogenen Temperatur abhängige Brillouin-Streuparameter die Linienbreite oder die halbe Linienbreite der spektralen Verteilung ist; und
wobei das Mittel zum Verwenden eingerichtet ist, un den gemessenen Parameter mit vorbestimmten oder kalibrierten Messungen zu vergleichen, um die kryogene Temperatur zu bestimmen.

5. Sensor nach Anspruch 4, weiters mit:
Mitteln zum Messen zumindest eines zusätzlichen, von der kryogenen Temperatur abhängigen Brillouin-Streuparameters in der optischen Faser (2) an einer Messstelle; und
Mitteln zum Verwenden der gemessenen Parameter zur Bestimmung der kryogenen Temperatur durch Vergleichen der gemessenen Parameter mit vorbestimmten oder kalibrierten Messungen;
wobei der zusätzliche, von der kryogenen Temperatur abhängige Brillouin-Streuparameter die Mittenfrequenz ν_{B} der spektralen Verteilung und/oder der maximale Gewinn g_{B} ist; und
wobei das Mittel zum Verwenden eingerichtet ist, um die Linienbreite oder halbe Linienbreite und den maximalen Gewinn g_{B}; oder die Linienbreite oder halbe Linienbreite und die Mittenfrequenz ν_{B}; oder die Linienbreite oder halbe Linienbreite, den maximalen Gewinn g_{B} und die Mittenfrequenz ν_{B} zu verwenden.

6. Sensor nach Anspruch 4 oder 5, wobei die kryogene Temperatur im Bereich unter 200 K liegt.

7. Sensor nach einem der Ansprüche 4 bis 6, mit Mitteln zum Bestimmen der Temperatur als Funktion der Länge entlang der optischen Faser (2).

8. Sensor nach einem der Ansprüche 4 bis 7, wobei die Mittel zum Messen einen Brillouin-Streuanalysator (8) aufweisen.

9. Sensor nach einem der Ansprüche 4 bis 8, wobei die optische Faser (2) in der Nähe der Messstelle aufgewickelt ist.

## Revendications

1. Procédé pour détecter les températures cryogéniques comprenant :
la mesure d'un paramètre de diffusion Brillouin dépendant de la température cryogénique dans une fibre optique (2), et
l'utilisation du paramètre mesuré pour déterminer la température cryogénique,
**caractérisé en ce que** le paramètre de diffusion Brillouin dépendant de la température cryogénique est la largeur de raie ou la demi-largeur de raie de la distribution spectrale, et
dans lequel le paramètre mesuré est comparé avec des mesures prédéterminées ou étalonnées pour déterminer la température cryogénique.

2. Procédé selon la revendication 1, comprenant en outre :
la mesure d'au moins un paramètre de diffusion Brillouin supplémentaire dépendant de la température cryogénique dans une fibre optique (2), et
l'utilisation des paramètres mesurés pour déterminer la température cryogénique en comparant les paramètres mesurés avec des mesures prédéterminées ou étalonnées,
dans lequel l'au moins un paramètre de diffusion Brillouin supplémentaire dépendant de la température cryogénique est un ou plusieurs de la fréquence centrale υ_{B} de la distribution spectrale et du gain maximum g_{B}, et
dans lequel l'étape d'utilisation comprend l'utilisation de la largeur de raie ou de la demi-largeur de raie et du gain maximum g_{B}, ou de la largeur de raie ou de la demi-largeur de raie et de la fréquence centrale υ_{B} ; ou de la largeur de raie ou de la demi-largeur de raie, du gain maximum g_{B} et de la fréquence centrale υ_{B}.

3. Procédé selon la revendication 1 ou la revendication 2, dans lequel la température cryogénique est située sur une plage inférieure à 200 K.

4. Capteur de température cryogénique pour détecter les températures cryogéniques, comprenant :
une fibre optique (2),
des moyens pour mesurer à un emplacement de mesure un paramètre de diffusion Brillouin dépendant de la température cryogénique dans la fibre optique (2), et
des moyens pour utiliser le paramètre mesuré pour déterminer la température cryogénique,
**caractérisé en ce que** le paramètre de diffusion Brillouin dépendant de la température cryogénique est la largeur de raie ou la demi-largeur de raie de la distribution spectrale, et
dans lequel les moyens d'utilisation sont agencés pour comparer le paramètre mesuré avec des mesures prédéterminées ou étalonnées pour déterminer la température cryogénique.

5. Capteur selon la revendication 4, comprenant en outre :
des moyens pour mesurer à un emplacement de mesure au moins un paramètre de diffusion Brillouin supplémentaire dépendant de la température cryogénique dans la fibre optique (2), et
des moyens pour utiliser les paramètres mesurés pour déterminer la température cryogénique en comparant les paramètres mesurés avec des mesures prédéterminées ou étalonnées,
dans lequel le paramètre de diffusion Brillouin supplémentaire dépendant de la température cryogénique est un ou plusieurs de la fréquence centrale υ_{B} de la distribution spectrale et du gain maximum g_{B}, et
dans lequel les moyens d'utilisation sont agencés pour utiliser la largeur de raie ou la demi-largeur de raie et le gain maximum g_{B} ; ou la largeur de raie ou la demi-largeur de raie et la fréquence centrale υ_{B} ; ou la largeur de raie ou la demi-largeur de raie, le gain maximum g_{B} et la fréquence centrale υ_{B}.

6. Capteur selon la revendication 4 ou la revendication 5, dans lequel la température cryogénique est située sur une plage inférieure à 200 K.

7. Capteur selon l'une quelconque des revendications 4 à 6, comprenant des moyens pour déterminer la température en fonction de la longueur le long de la fibre optique (2).

8. Capteur selon l'une quelconque des revendications 4 à 7, dans lequel les moyens de mesure comprennent un analyseur de diffusion Brillouin (8).

9. Capteur selon l'une quelconque des revendications 4 à 8, dans lequel la fibre optique (2) est enroulée à proximité de l'emplacement de mesure.
